# EUROPEAN PATENT APPLICATION

(11) **EP 1 280 060 A2**
(43) Date of publication of application: **29.01.2003**
(21) Application number: 01308379.5
(22) Date of filing: 01.10.2001
(51) Int. Cl.: G06F 9/50

(54) **A system for managing a computer network**

(30) Priority: 28.07.2001 GB 0118428
(71) Applicant: Dresdner Kleinwort Wasserstein Limited, London EC4R 3UX (GB)
(72) Inventor: Tarrant, David, c/o Dresdner Kleinwort Wasserstein, London EC4R 3UX (GB); Johnson, Simon, c/o Dresdner Kleinwort Wasserstein, London EC4R 3UX (GB)
(74) Representative: Sharp, Alan Cooper

(57) **Abstract**

A system for managing a computer network having a multiplicity of users, applications programs and servers, comprises a) user interface means for displaying a list of tasks appropriate to a given user at a given time, b) administration means comprising a software object including a set of rules defining the relationships between users, applications programs and servers, c) a module comprising database means and one or more LDAP compliant directories for storing user records, application program records, and server records, to enable updating of said records in a systematic way, and d) synchronisation means for managing the exchange of data between said administration means, module c), and the computer network. The administration means in use performs tasks such as user record or server creation, updating, and deletion; application program installation, commissioning, and program updating, in response to user input.

## Description

### FIELD OF THE INVENTION

The present invention relates to a system for managing a computer network having a multiplicity of users, applications programs and servers.

### BACKGROUND ART

In recent years, computer networks have been developed for connecting one computer to another or to allow computers to share peripherals. Messages sent over such a network must use a common communications protocol. Such networks can be essentially self-contained intranets, or extranets where the communications channels used are not controlled by a given entity.

Organizations seeking to centrally manage application distribution for many thousands or tens of thousands of users must undertake a large number of management tasks, including:-
user creation
application package creation
application upgrades and testing
application assignment to users
user permissioning
billing
application presentation
security
single sign on

A large corporation can expect to manage over 10,000 users with a portfolio of 400 or more applications, most of which will have 6 monthly update cycles. An average of 20 applications per user would create over 200,000 user assigned applications, each of which would need to be amended at least one or twice a year.

Simple ASP administration requires the creation and deletion of user assigned applications, amending the user assigned application when the application is updated, and then charging clients for the number of applications being used on a periodic basis. This produces a large amount of work, especially for an ASP with hundreds of thousands of users. Traditionally such systems have required a large administration and support team, which needs to grow at the same rate as the client base, hence negating a major benefit of the ASP model - namely reduced administration costs.

The present invention seeks to mitigate this complexity and deliver cost savings. It offers client organizations the devolved ability to organize and administer ASP users. This information is stored securely so that billing can begin immediately. Doubling the number of users should not increase the number of ASP administrators.

Network administration often involves the use of what is known as a meta directory, comprising a global database which controls a plurality of directories, such as for example Microsoft Active Directories, Netscape directory services and NDS.

### SUMMARY OF THE INVENTION

According to a first aspect of the invention there is provided a system as specified in claims 1 - 6,

### BRIEF DESCRIPTION OF THE DRAWINGS

Embodiments of the invention will now be described, by way of example only, with reference to the accompanying schematic drawings, in which:-
Figure 1 shows a computer network,
Figure 2 shows a system according to the present invention,
Figure 3 shows a sample user profile tree,
Figure 4 shows a sample client directory,
Figure 5 shows a sample client directory with global application domain,
Figure 6 shows group membership of a global application domain group,
Figure 7 shows the master user to single sign on user link,
Figures 8 and 9 shows a profile directory with master user and application groups,
Figure 10 shows a profile directory user, and
Figure 11 shows group membership of a profile directory.

### DETAILED DESCRIPTION OF THE INVENTION

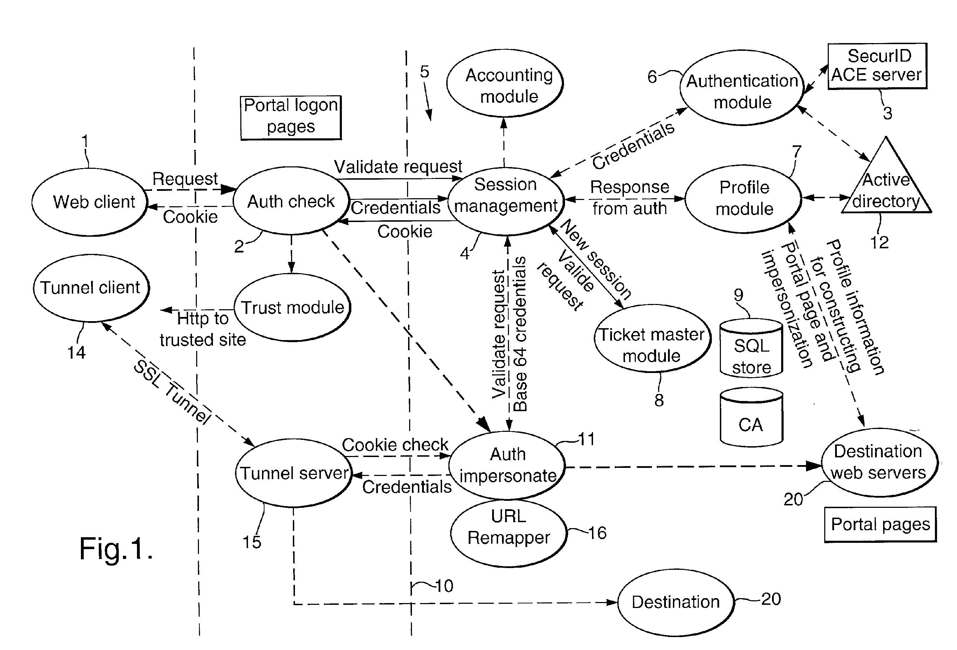

An overall view of a computer network is shown in Figure 1. This network will first be described, before the system of the present invention is discussed.

All requests made to the network, for example by browsing by a client (1), will first be intercepted by a web filter called the authorisation check module (2). A web filter is a generic term used to describe a process that has the ability to filter and process incoming HTTP requests. The authorisation check module has the ability to intercept all HTTP incoming requests and perform a series of functions before either allowing the request to proceed or returning the request back to the user. As this the first request that has been made by the client, the client will not be presented a ticket or session ID at this stage. Instead, the client will be redirected to a set of portal logon pages, on a logon web server.

These portal logon pages contain the initial pages which prompt the user for the authentication method required to logon to the portal. For example, this may be a page that prompts the user to select either user ID and password, a secure ID token, or an X 509 certificate, and then prompts a user for that information. Once the user has supplied these credentials, the authorisation check module passes them internally to a main session management module (4).

The authorisation check module passes the credentials across to the session management module, with the request for validation. One of the key objectives for the authorisation check module is that it will not let requests pass into the internal network (5) unless they have been validated. This zone is referred to as the authorisation zone, and is separated from the sessions manager module by a firewall (10). The session management module is not directly responsible for validating the credentials, and thus passes them to an authentication module (6). This authentication module has a number of hooks into the system that it will support credentials for. In the present case this will be a hook into an accessible RSA SecurlD ACE server (3), and a hook into the Active Directory (or any LDAPv3 store) (12) to obtain the public key of certificates.

The results of the authentication are passed back to the session management module. Providing that the credentials supplied were valid, the session management module creates a new session for this user/client and passes the session details to the profile management module (7). If validation fails, the request is returned to the logon web server as rejected.

The session management module checks the profile management module to ensure that a valid user profile exists for the client who is trying to logon. Communication with the profile management module also confirms a unique system ID for the user.

The results from the profile management module are passed back to the session management module. Providing a valid system user exists (i.e. the client has a valid user profile and is known to the system), the session management module passes the session details down to the Ticket Master module (8). This module stores the session in one of the available SQL repositories (9) (selection is based on a hash value of the session details to insure security), signs the session with a private key, and passes this information back to the session management module as a token, ticket or cookie containing the signed session details, which is returned to the authorisation check module, which returns the ticket or cookie to the client browser, and sends an HTTP 302 redirect in order to direct the user to the portal pages.

Once the client is logged on to the system as a user, ensuring that the user is valid for the entirety of the session involves a similar process. When the user sends a further request to the system, it is again intercepted by the authorisation check module (2). This time however, the authorisation check module detects that a cookie or ticket is being presented as part of the request. In order to validate the session details, the authorisation check module has to pass the request across to the session management module (4). The session management module again acts as an arbitrator with this request, and forwards the session details to the Ticket Master module (8). The Ticket Master module performs two checks: one to ensure the contents of the session details are valid; a second to check whether an existing session exists based on these details. The results of these two checks are returned to the session management module, which passes this information back to the authorisation check module. Providing the session is valid the request is allowed to continue.

The ticket includes two pieces of time information - a refresh time and an expiry time. The refresh time is to allow the architecture the ability to refresh the ticket on a periodic basis without forcing the user to log on again. This helps protect against replay attacks. The ticket master module comprises two components - an array of ticket master machines and a number of shared storage areas to store all the tickets. This arrangement is beneficial because the subsystem can be load balanced - i.e. the ticket storage and retrieval process does not have to be performed by the same ticket master machine each time.

The inbound request next gets forwarded to the impersonate module (11). This module is responsible for checking the validity of the session ID and impersonating the incoming user. In order to do this, the impersonate module passes the session details and the URL of the resource that the user is trying to access to the session management module. The system makes two authentication checks. The authorisation check module first validates the session, before allowing the request to be proxied. The impersonate module re-checks the session details before processing the request.

This re-check is necessary as it confirms that the session is valid. Although there is a level of trust for the session management module, it is insecure to trust the components within the authorisation system. If processes were hijacked within the authorisation system it would not be acceptable for any false requests to be treated as trusted, hence a second validity check is made. Once the validity of the session has been confirmed, the session management module performs an indexed search in the profile management module, which includes an Active Directory 12 (or LDAPv3 store) against the URL that the user is trying to access. Once this has been found, the following items are extracted:-
a. Has the validated user been granted access to the specified URL resource?
b. If so, what username and password should be used to log her onto this resource?
Provided the answer to the first question is yes, the username and password are extracted from the Active Directory (using a Microsoft component called SPRITE) and passed to the session management module.

The session management module then creates a Base 64 encoded header based on the user credentials, and returns these to the impersonate module, which writes the HTTP authorisation header with these details before the request is forwarded to the destination host or resource.
The impersonate module 11 can work alongside a URL re-mapping module 16 as a web filter.

In general, the destination host or resource (20) will be behind a dedicated firewall. Once the user is logged onto the system they have the option of creating a tunnel connection through the firewall.

Of course, access to an internal resource or host will only be provided to external sources or clients who are trusted/authorised. A known way to provide trusted third party authentication for TCP/IP networks is the Kerberos protocol, described earlier. As an alternative, each site can have a list of other sites it trusts (such a trust can be set up using any methodology).

In the absence of central site verification, some form of secure digital signature is required to discourage attack through impersonation.

The trust relationship between sites is set up through an exchange of root CA certificates and ticket master certificates that hold the ticket master public key chain. The ticket master modules in the trusted environments are then able to validate tickets from the trusted site in the same way that they validate their own tickets by checking the signature on the ticket.

Each ticket issued must be refreshed on a regular basis. This refresh must be done by the issuing session management system to ensure that the users session state is maintained. There are situations where the user may log on to the issuing site and not return there to get their ticket refreshed. To ensure that a correct session state is maintained, the trusted site must monitor the rotation period on the user's ticket and communicate back to the issuing site, without client intervention, to refresh the users ticket. This is the function of the trust module.

When the session management module of a trusted site recognizes that a ticket is due to be refreshed it will instruct one of the authentication zone servers to communicate via the trust module with the ticket-issuing site, who will then issue a refreshed session ticket cookie. The trust module will issue an HTTP request to the issuing session management module, and the system will regenerate the session cookie and return it in an HTTP response. The trust module will return the refreshed cookie back to the session management module via the authentication zone servers.

The system of the present invention comprises a user manager module, which can be implemented as a separate stand alone working unit for other applications and application service providers (ASPs), or it can be integrated into a single system with the modules already described.

The user manager module offers client organizations the devolved ability to organize and administer ASP users. User application pairs can be created by individual users via a menu of available applications on their homepage. This information is stored securely so that billing can begin immediately. Doubling the number of users should not increase the number of ASP administrators.

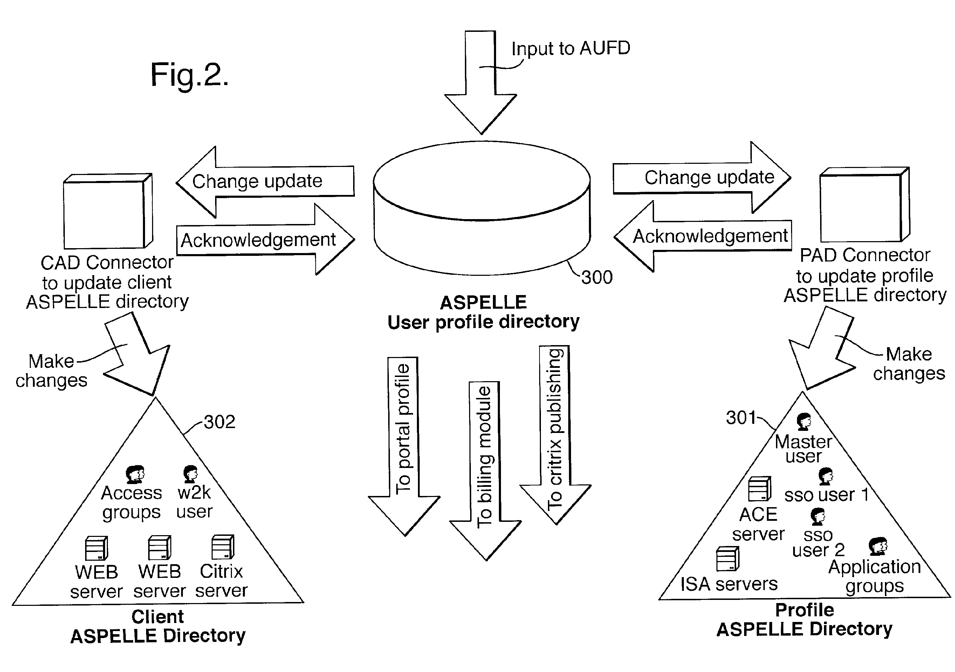

The system of the present invention is shown in Figure 2, and comprises a meta directory in the form of a global user profile database (300) which controls a plurality of directories, for example LDAP compliant directories such as Microsoft Active Directories, Netscape directory services and NDS. Typically, one of these LDAP compliant directories will already be present as part of the organizations existing administration scheme. In the present embodiment, the two LDAP directories are Microsoft Active Directory (AD) databases, namely the Profile Management AD (301) which manages access profiles, and the User Account AD (302), which manages resource access to, for example, Windows 2000 based services and applications. Using such a structure, one can view and edit one entry in the meta directory to manage or modify all of a given user's details in the plurality of LDAP compliant directories.

The User Management Module is a multi-tier component based framework to plan and design the application distribution process in a distributed environment.

It manages users, application installation and distribution, application assignment to users, groups and resource access in a network environment. The network environment consists of :-
A User Profile Directory (UPD)
Client Directory (CAD)
UPD-CAD Connector
Profile Directory (PAD)
UPD-PAD Connector

In this embodiment, the UPD is used for a database repository. The database repository stores information about User, Site, User Group, Server, Server Group objects. The UPD environment is used to collectively refer all the five components listed above.

The following are some design assumptions towards the network environment required :-
- The UPD environment's interface with a customer's environment is the Client Directory. If a customer does not have a LDAP based directory, then CAD can be used for resource access. CAD co-exists with the customer's environment.
- A customer's LDAP based directory can be used to interface with the UPD environment as long as it meets the UPD environment's entry criteria.
- The UPD will be the central point of entry for administration
- Future customers will incorporate the UPD system into their own environment.

The initial concept for control for the overall information flow is outlined below.
Step 1: Organization structure, User, Package, infrastructure and Resource information is entered in the UPD environment via UPD.
Step 2: CAD connector tracks changes inside UPD, interprets and translates them before propagating these changes in Client directory.
Step 3: After successfully processing the changes inside CAD, the CAD connector sends and acknowledgement back to UPD.
Step 4: PAD Connector, like CAD connector tracks changes inside UPD but with a difference. It captures only those changes, which are already processed by the CAD connector.
Step 5: PAD connector sends an acknowledgement back to UPD after it has processed the changes inside PAD. PAD connector resets the user credentials inside the UPD.

The UPD is the data entry point for interaction for users management. The UPD acts as an information provider for two Active Directory repositories that make up the UPD environment. The UPD environment has in-built support for assigning applications to the CITRIX desktop profiles and assigning information for portal access.
The UPD provides a framework to -
1. Create and modify a hierarchical structure for Users
2. Create, delete and modify Sites, User Groups and Users
3. Create, delete and modify Applications/Packages
4. Create, delete and modify Server objects and/or groups
5. Assign Applications/Packages to User and User Groups

### 1. Create and modify a hierarchical structure for Users

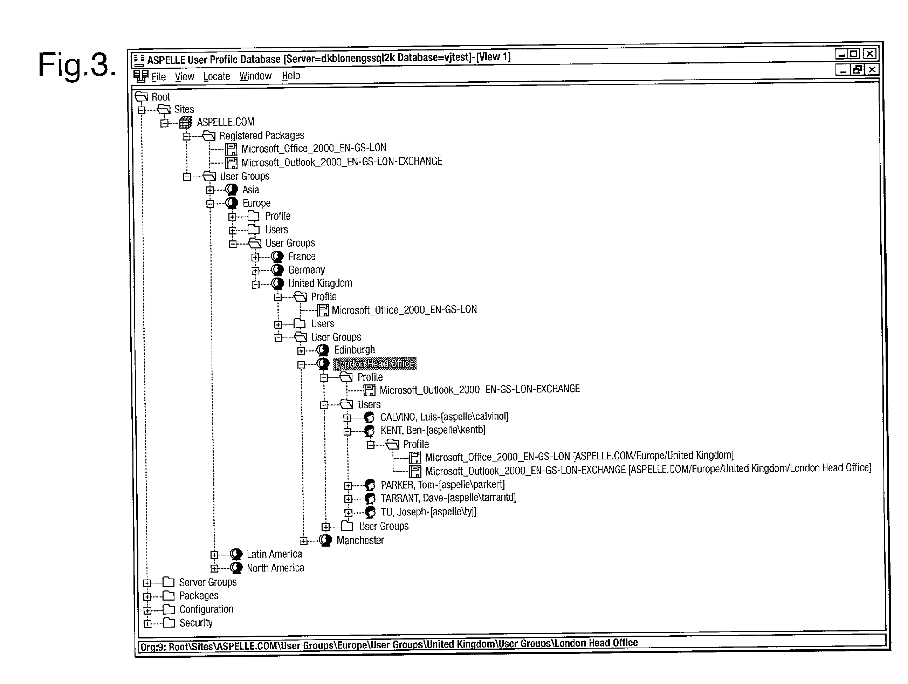

The UPD provides enough flexibility for the solution implementers and architects to design a hierarchical tree structure. This tree structure can be used to organize Users across different function areas, geographic location. The tree consists of Sites, User Groups and Users.
A site is a root level object in a UPD tree. It holds the information about the Applications/Packages, which have been qualified for deployment. A site also contains a User Group. User Groups can be assigned Applications/Packages.
The child objects - User Groups and Users inherit any application/package assigned to a User Group. Hence, it is a very easy way to assign application/package to many users.
In the design and conceptualization stage of UPD tree structure construction, consideration needs to be given to application/package distribution and administration.
The UPD tree hierarchy is created and maintained by the CAD connectors inside the Client Directory.
A sample UPD User tree is shown in Figure 3.

### 2. Create, delete and modify Sites, User Groups and Users

All the objects - Site, User Group and Users - can be created, deleted or modified in a UPD user tree. The UPD provides privilege tokens to create, modify and delete an object. A user needs to have appropriate privilege tokens then it he/she can create, delete or modify objects in a UPD tree.
**Site:** A site is a notional representation of an independent Organizational Unit within an Organization. A site can be used as an independent Organization. UPD can host application distribution process for several independent Organizations - best suited for an ASP model.
The privilege tokens with context of a site provide administration granularity and restrictions so that Site administrator of Site-A does not access UPD objects under Site-B.
The site holds registered applications and user groups. An application needs to be registered at a site before it can be assigned to user groups and/or to individual users, down in the tree structure.
**User Group:** This holds users and user groups. An application can be assigned to a user group. Assigning an application to a user group is the easiest way of assigning the application to all its child users. All the child users and user groups inherit the application assigned to a parent user group. All the inherited applications are not activated by default. The application needs to be activated before it can be made "live" in UPD environment. An administrator needs to have necessary privilege tokens to create, delete and modify a user group and/or to activate packages.
**User:** Users are leaf-level objects of the UPD user tree. Each user object has a profile, which shows all the assigned Applications/Packages - both inherited and directly assigned. All the inherited Applications/Packages are shown with the full path of the assigned user group object for traceability.

To create a user, Last Name, First Name, SMTP address and User Credentials are captured. Password credentials are also captured, and passwords are created and randomised. The UPD checks for the uniqueness of SMTP address and LoginID before a user record is created in the UPD environment and marks for CAD and PAD update. The password is encrypted and stored in the repository and eventually destroyed by the PAD connector.

An administrator needs to have necessary privilege tokens to create, delete and modify a user.

### 3. Create, delete and modify Applications/Packages

The UPD environment has in-built support for application packaging before an Application/Package can be "offered" for a site registration, including a set of procedures, guidelines and naming conventions for application packaging.

### 4. Assign Applications/Packages to User and User Groups

An Application/package can be assigned to a user group, or directly to a user. Each user object has a profile, which shows all the assigned Applications/Packages - both inherited and directly assigned. All the inherited Applications/Packages are shown with the full path of the assigned user group object for traceability, as shown in Figure 2.

The Client Directory (CAD) can have trust relationships with an existing Windows NT domain or an Active Directory, so that the UPD users can have permission to access resources in the existing environment.

The UPD objects are mapped to corresponding CAD objects as follows.

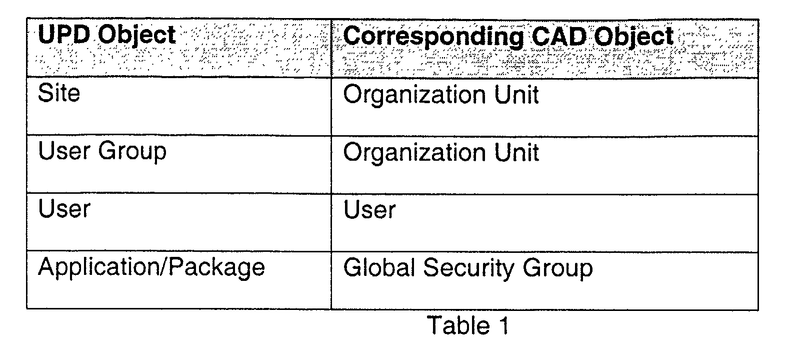

Table 2 shows establishes the link between UPD actions and their corresponding CAD actions. The translation logic has been built in the CAD Connector object and is explained later.

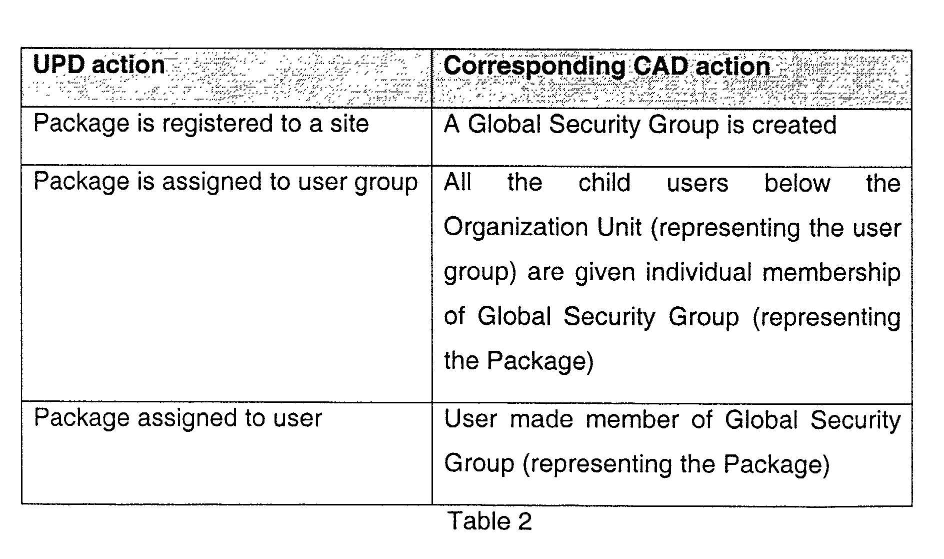

Three attributes are added to CAD and linked to User, Organization Unit and Group classes. These are required for CAD Connector to work consistently and efficiently. The specific details are furnished in Tables 3 and 4 below.
Three attributes are added to CAD, as shown in Table 3

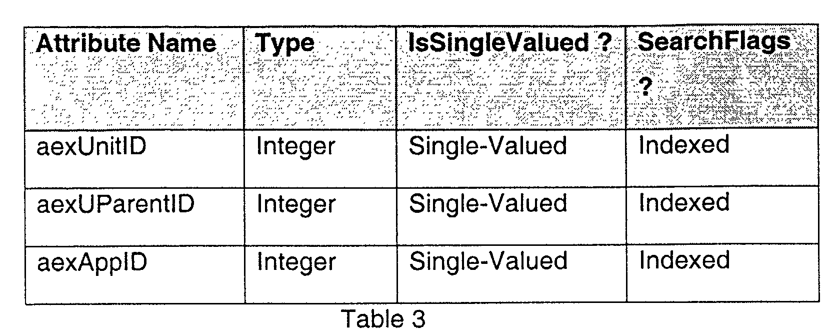

And assigned to the following classes, as shown in Table 4,

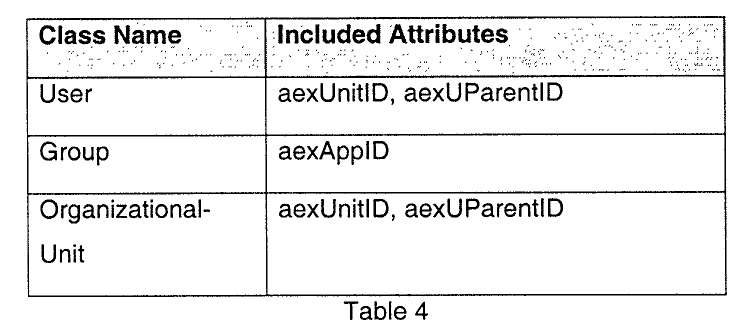

UPD set-up includes a LDIF file to implement these changes.

The UPD to CAD relation is better explained by an example, shown in Figure 3. A site ASPELLE.COM has got two registered packages - Microsoft Office 2000 and Microsoft Outlook 2000. The site has a geographical User Group structure. Microsoft Office 2000 is assigned at a User Group - United Kingdom and Microsoft Outlook 2000, package is assigned at a User Group - London Head Office.

The CAD Connector captures, translates and then propagates ASPELLE.COM site, UPD tree structure and its objects to CAD. The hierarchy is maintained and the Sites and User Groups in UPD are created as Organization Unit in CAD.

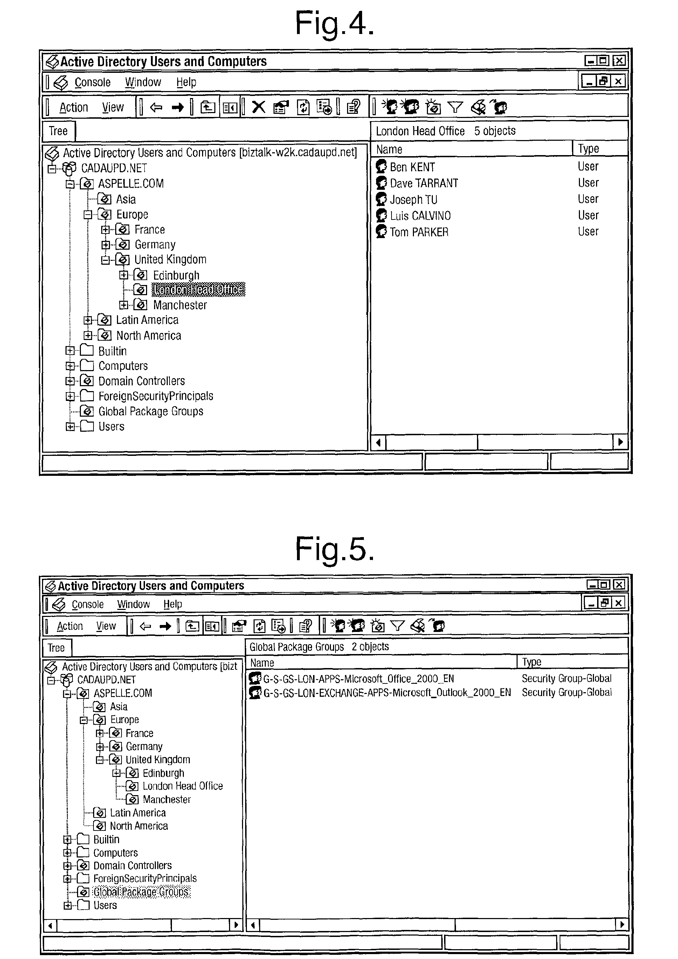

So an updated CAD looks as shown in Figure 4. All the registered application in UPD are captured by CAD Connector and translated as Global Security Groups. It creates an Organization Unit - "Global Package Group" and creates all the Global Security Groups under it.

In the previous example, two applications - Microsoft Office 2000 and Microsoft Outlook 2000 are registered at the site ASPELLE.COM. These two applications need to exist in CAD before it can be assigned to a User and User Group. The CAD Connector identifies this dependency and creates "Global Security Group" for both applications under an Organization Unit - "Global Package Group", as shown in Figure 5.

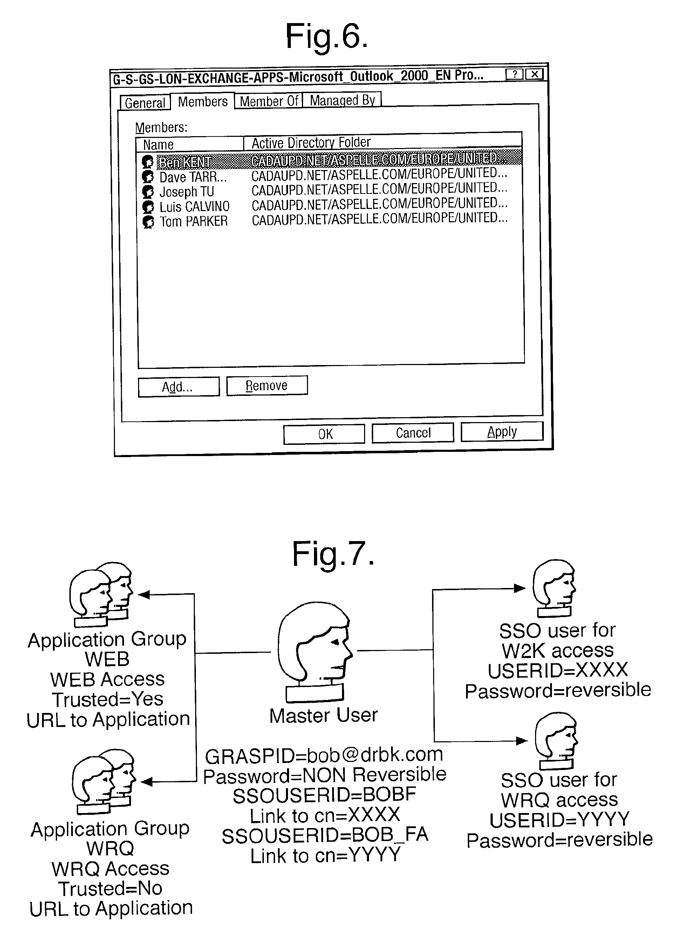

In UPD, a user's profile shows all the applications/packages assigned to him/her - directly or inherited. Whereas in CAD, the Global Security Group, representing the application shows the list of users, who have been assigned the application, as shown in Figure 6.

The UPD-CAD connector is a COM object and it acts as an interface between UPD and CAD. It periodically tracks the changes inside the UPD and then propagates them to CAD. CAD Connector acknowledges the changes in the UPD, so that the processed information can be picked-up by PAD Connector. CAD Connector has built-in knowledge about the UPD to CAD attribute and object mappings, and most important of all is the password decryption algorithm.

The CAD Connector is designed to propagate changes from UPD to CAD and not vice-versa. It also works on the assumption that UPD is the single point of information update. CAD Connector can run as a service or as a schedule task, which periodically tracks changes inside UPD and then propagates them to CAD.

The Profile Directory (PAD) is used for Internet authentication and Single-Sign-On. The PAD is also a source of profile information for the user personalized portable portal. The PAD should be regarded as part of the product toolkit and as such it is a *black box.* It has proprietary extensions and will not be included in any AD forests, anyone other than the vendor making changes to the schema will compromise security, integrity and robustness.

The system provide a single sign on environment for the users to work with in the network environment. Session and profile management requires specific items to be created within Active Directory for application assignment to work. These single-sign-on user objects hold information required for the incoming user connection to connect to the target application.

The specific items are:
- Master Users
- Applications
- Single-Sign-On Users

The PAD holds Master Users, and Master Users are linked to Single-Sign-On (SSO) Users. A Master User can be mapped to a X509 certificate. A duplicate of this user is held in the ACE database to map the SECURE ID tag. A SSO user is used to logon to a application that the Master User is assigned to.

Few attributes have been added to PAD and linked to User and Group classes. This is required for the PAD Connector to work consistently and efficiently. The specific details are furnished in Tables 5 and 6 below. Table 5 shows the attributes added to PAD:-

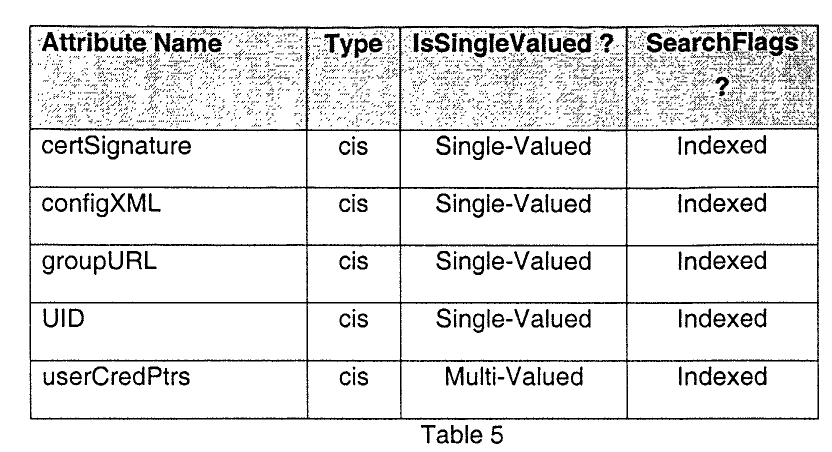

And assigned to the following classes, as shown in Table 6 -

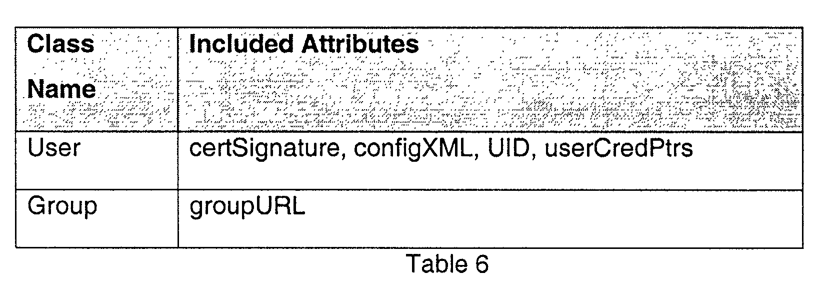

UPD set-up includes a LDIF file to implement these changes.

A Master user is a standard User object that has extra attributes. These attributes are listed in Table 7.

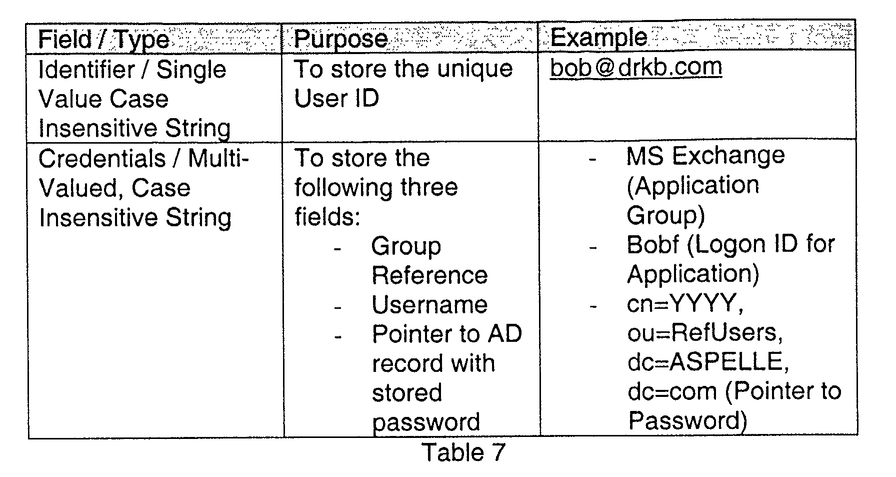

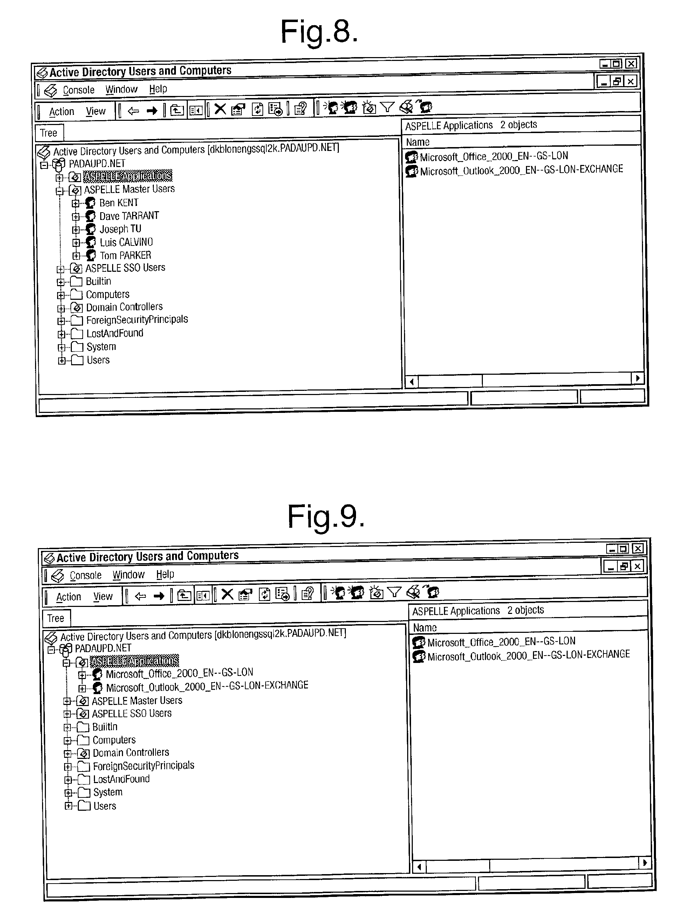

These extra attributes are used as a pointer to the Single-Sign-On user that ASPELLE will use to log onto the target applications. The Master User is also made a member of the Application Group, representing the target application. All the Master Users are created under an Organization Unit "ASPELLE Master Users" (Figure 8).

The Application group is a standard Active Directory Group object that has an extra attribute that holds the URL of the target application that the user will be using. In the network environment all the application groups are created under an Organization Unit, for example "ASPELLE Applications" (Figure 9). An example of an Active Group is shown in Table 8.

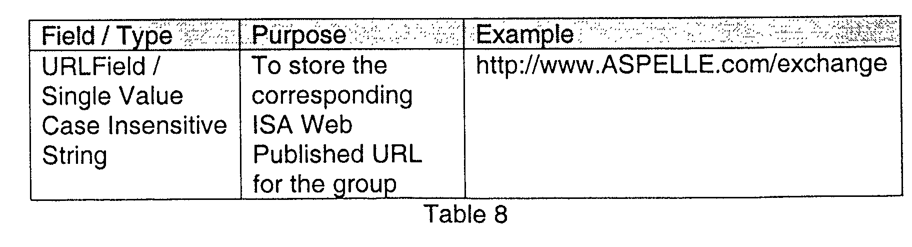

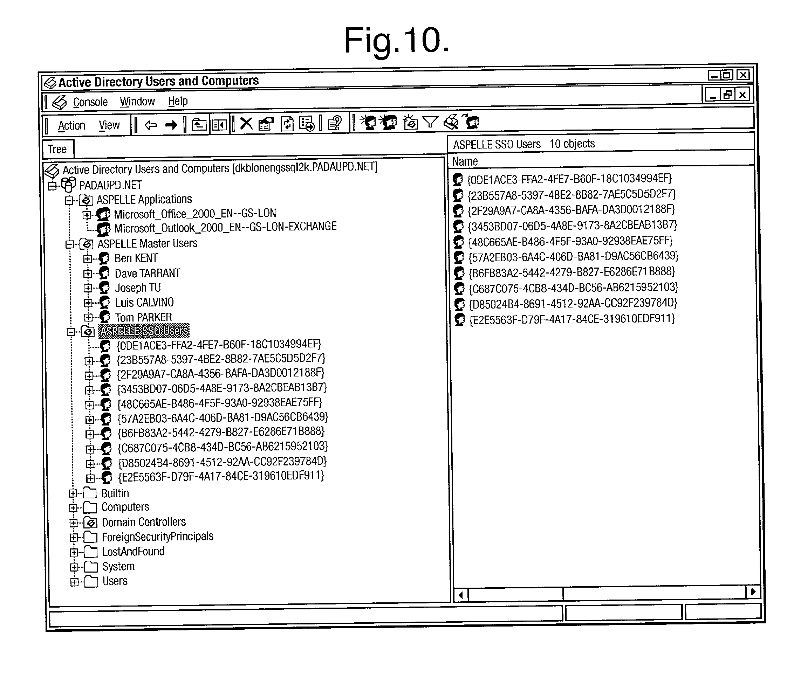

The Single Sign On (SSO) user is a standard User object. This User object has one special property that allows for the user password to be re-hashed and then used to sign onto the SSO target application. All the Single Sign On Users are created under an Organization Unit, for example "ASPELLE SSO Users" (see Figure 10).

Unlike CAD, the PAD maintains a flat structure in three Organization Units. The UPD objects are mapped to corresponding PAD objects, shown in Table 9.

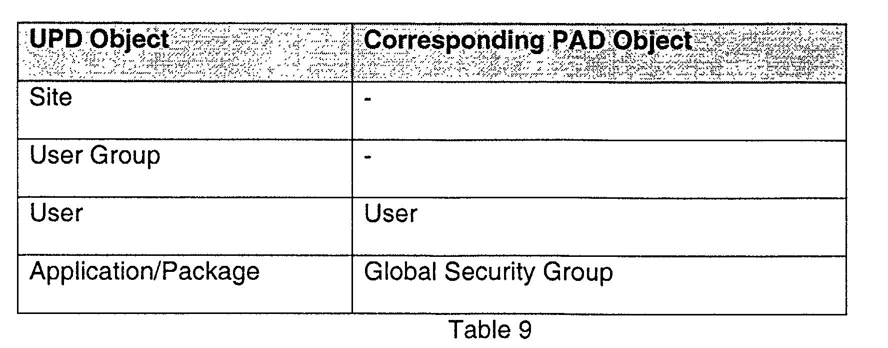

Table 10 establishes the link between UPD actions and their corresponding PAD actions. The translation logic is built in the PAD Connector.

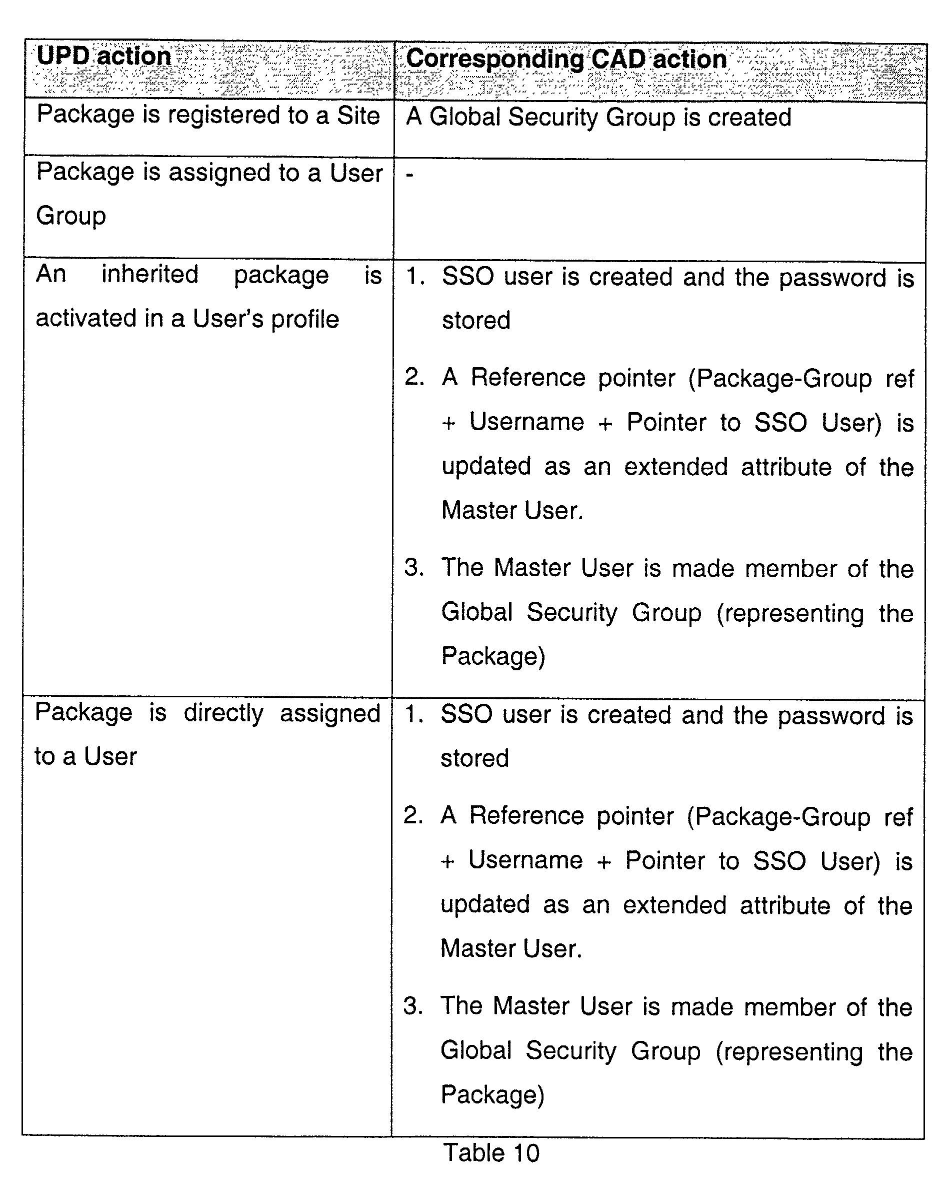

The PAD Connector periodically queries the UPD and tracks those changes, which are already processed by the CAD Connector. PAD Connector picks these changes and updates the Profile Directory.

All the UPD Users are created under an Organization Unit, for example "ASPELLE Master Users". PAD Connector ignores the site and User Group information (and therefore the hierarchical tree structure, as shown in Figure 8).

We can use the same example, which was used to explain UPD to CAD relationship. As in the previous example, two applications - Microsoft Office 2000 and Microsoft Outlook 2000 were registered at a site ASPELLE.COM. These two applications are created under Organization Unit "ASPELLE Applications". (as shown in Figure 9)

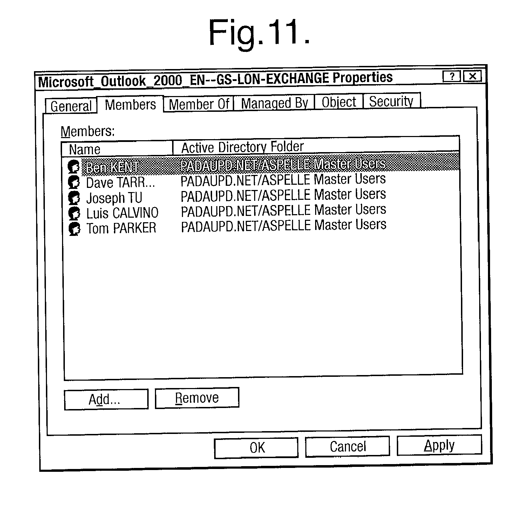

When an application is assigned to a User in UPD and CAD connector processes it, PAD Connector interprets the action inside UPD and takes the following actions :-
1. A SSO user is created under Organization Unit - "ASPELLE SSO Users". The password is stored against it a property is set so that the password can be rehashed (as shown in Figure 10).
2. A Reference pointer (Group ref + Username + Pointer to SSO User) is updated against an extended attribute of the Master User
3. The Master User is made member of the Global Security Group (representing the application, as shown in Figure 11).

After the above three steps are completed, the PAD Connector acknowledges the changes back to UPD and destroys the User Credentials.

The UPD-PAD connector is a COM object and it acts as an interface between UPD and PAD. It periodically tracks the changes inside the UPD and checks if CAD connector has processed them. If CAD connector has processed these changes then the PAD Connector propagates those changes inside PAD. PAD Connector has built-in knowledge about the UPD to PAD attribute and object mappings, and most important of all is the password decryption algorithm.

The PAD connector is designed to propagate changes from UPD to PAD and not vice-versa. It also works on the assumption that UPD is the single point of information update.

The last and the most important tasks of PAD connector are to send the acknowledgement back to UPD and destroy the User Credentials inside UPD.

PAD Connector can run as a service or as a schedule task, which periodically tracks changes inside UPD and then propagates them to PAD

## Claims

1. A system for managing a computer network having a multiplicity of users, applications programs and servers, the system comprising
a) user interface means for displaying a list of tasks appropriate to a given user at a given time, said user interface means capable of exchanging data with the computer network,
b) administration means comprising a software object including a set of rules defining the relationships between users, applications programs and servers, said administration means capable of exchanging data with the computer network and with the user interface means,
c) a module comprising database means and one or more LDAP compliant directories for storing user records and/or application program records and/or server records, to enable updating of said records in a systematic way, and
d) synchronisation means for managing and synchronising the exchange of data between said administration means, module c), and the computer network,
the system being adapted and arranged to enable users to cause or permit said administration means to perform one or more tasks from the group consisting of: user record creation; user record updating; user record deletion; application program installation; application program commissioning; application program updating; changing application program location; application program deletion; server commissioning, server updating; server removal.

2. A system as claimed in claim 1 in which the set of rules is stored as a set of objects in an object-oriented environment.

3. A system as claimed in claim 1 in which module c) consists of a meta-directory.

4. A system as claimed in claim 1 in which the synchronisation means includes a databus.

5. A system as claimed in claim 1 in which there are a plurality of classes of user, each class having a respective set of appropriate tasks.

6. A system as claimed in claim 1 in which the user record comprises a number of data fields, as specified in Appendix A and B.
